(19) **Europäisches Patentamt**
**European Patent Office**
**Office européen des brevets**

(11) **EP 3 942 487 B1**

(12) **EUROPEAN PATENT SPECIFICATION**

(45) Date of publication and mention
of the grant of the patent:
**01.05.2024 Bulletin 2024/18**

(21) Application number: **19919705.4**

(22) Date of filing: **19.03.2019**

(51) International Patent Classification (IPC):
**H04W 4/24** (2024.01)     **H04W 4/70** (2018.01)
**H04W 52/02** (2009.01)     **H04L 12/14** (2024.01)
**H04M 15/00** (2024.01)

(52) Cooperative Patent Classification (CPC):
**H04W 4/70; H04L 12/1403; H04M 15/39;
H04M 15/8214; H04W 4/24; H04W 52/0277;**
**Y02D 30/70**

(86) International application number:
**PCT/IN2019/050220**

(87) International publication number:
**WO 2020/188580 (24.09.2020 Gazette 2020/39)**

(54) **METHODS AND APPARATUS FOR INTERNET OF THINGS RESOURCE MANAGEMENT**

VERFAHREN UND VORRICHTUNG ZUR VERWALTUNG VON
INTERNET-DER-DINGE-RESSOURCEN

PROCÉDÉS ET APPAREIL DE GESTION DE RESSOURCES DE L'INTERNET DES OBJETS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.01.2022 Bulletin 2022/04**

(73) Proprietor: **Telefonaktiebolaget LM Ericsson
(publ)
164 83 Stockholm (SE)**

(72) Inventor: **DAUNERIA, Ankur
New Delhi 110014 (IN)**

(74) Representative: **Ericsson
Patent Development
Torshamnsgatan 21-23
164 80 Stockholm (SE)**

(56) References cited:
**WO-A1-2018/208295     US-A1- 2015 065 129
US-A1- 2016 034 284     US-A1- 2017 245 131**

- **KAI DING ET AL: "Defining a Digital Twin-based
Cyber-Physical Production System for
autonomous manufacturing in smart shop
floors", INTERNATIONAL JOURNAL OF
PRODUCTION RESEARCH., vol. 57, no. 20, 16
January 2019 (2019-01-16), pages 6315-6334,
XP055685509, GB ISSN: 0020-7543, DOI:
10.1080/00207543.2019.1566661**

**Description**

<u>TECHNICAL FIELD</u>

Embodiments of the present disclosure relate to methods and apparatus in networks, and particularly methods and apparatus for resource management in networks comprising Internet of Things devices.

<u>BACKGROUND</u>

The term "Internet of Things" (IoT) is used to describe the incorporation of wireless connectivity into a range of everyday devices, such as automobiles, household appliances (fridges, washing machines, cookers, etc.), sensors, and so on. The wireless connectivity is used to enable the IoT devices to send and receive data over a network, often for the purposes of remote monitoring or control of the devices. As an example of this, a user may wish to activate an IoT enabled cooker from a remote location to heat up a meal, or use a remote sensor in an inaccessible location to monitor conditions.

The number and variety of IoT devices are both increasing rapidly, and these trends are expected to continue in the coming years. As such, the monitoring of network resource usage by IoT devices is of growing importance; larger numbers of IoT devices with potentially greater data sending and receiving (and hence network resource) requirements per device will need to be taken into account when provisioning network resources such as the data capacity of a network.

The growing ubiquity of IoT devices raises particular network resource usage issues, in part due to the disposable nature of many of these devices. Large numbers of IoT devices (such as single function sensors) are created cheaply, often as sealed units with no intention of an end user replacing or recharging batteries. As a result of the limited availability of power, limited lifetimes and disposable nature of some IoT devices, allocating network resources for the IoT devices, and charging users of the devices for the network resources used, can create certain challenges.

Current IoT devices typically send data through a network only when necessary to complete an allocated task, for example, a sensor sending readings to a controller. The IoT devices do not typically undertake routine communications with the network, such as the routine location communications sent by mobile telephones, due to the power requirements of routine communications and also the required circuit complexity in the sending device. Due to the absence of routine communications, it can be difficult for the network to determine when an IoT device has finished use of network resources. An IoT device may no longer require network resources because the IoT device has temporarily shutdown or ceased sending/receiving information, or because the IoT device has permanently shutdown (for example, because the IoT device is a battery powered device and the battery has been exhausted).

Typically, a network handling the operation of IoT devices is not immediately aware that an IoT device has stopped using network resources, and is required to infer that the IoT device has stopped when a certain period of time elapses without network use. This is inefficient; the network necessarily must provide capacity for the IoT device during the period of inactivity, during which the device may have already ceased operation. Also, it is possible that the IoT device may still require network access after the period has elapsed and that there has simply been a pause in the access requirements, which can cause congestion issues if the network resources have been reallocated or deactivated by the network controller in the intervening period.

A further issue may arise when charging a user for tasks performed by an IoT device. As a result of the comparatively minimal communications between the IoT device and the network (for example, a network node), the network may not be aware of the tasks performed by an IoT device. A network node may monitor the amount of data sent and received by an IoT device, however the network node may not be able to determine what tasks or applications the data transmissions relate to, and may also not be able to determine if the IoT device is undertaking tasks or applications which do not require data transmission over the network.

3GPP TR 32.899 V15.1.0, a technical report of the 3<sup>rd</sup> Generation Partnership Project available at <u>ht-</u><u>tp://ww.3gpp.org/ftp/Specs/archive/32_series/32./899/</u> as of 6 March 2019, discloses charging solutions for use in <u>5G</u> architectures, including charging based on monitoring a device connection to determine the network resources used (see section 5.5).

US 2015/0065129 A1 discloses Machine to Machine (M2M) devices and communication methods. A communication method adopted by a M2M device includes establishing a traffic channel with a base station and transmitting M2M data via the traffic channel. The method further comprises determining that the M2M device is going to be powered down, and transmitting power-down registration information via the traffic channel.

<u>SUMMARY</u>

It is an object of the present disclosure to facilitate the management of IoT device network resource usage.

Embodiments of the disclosure aim to provide IoT devices, networks comprising IoT devices and network nodes and corresponding methods that alleviate some or all of the problems identified.

Aspects of embodiments of the disclosure provide methods in Internet of Things (IoT) devices for assisting network resource allocation, the method comprising: initiating a device shutdown procedure; and triggering the sending of a device shutdown message to a network node. The device shutdown message enables the network node to monitor the status of IoT devices that use the network node, thereby allowing network resources to be reassigned as required and improving the efficiency of the network.

The shutdown message comprises a device identifier and a task count. Inclusion of this information in the device shutdown message provides the network node with additional information regarding the activity of IoT devices, and can be used to more accurately allocate network resources and/or charge users for tasks or applications performed by IoT devices.

The IoT device shutdown procedure may be initiated when: a remaining device battery power falls below a threshold level, a mains power supply to the device undergoes a scheduled or unscheduled period of inactivity, or a shutdown is instructed. In this way, the network node may be promptly informed of the availability of network resources.

In a further aspect of an embodiment, the network node may receive the device shutdown message from the Internet of Things device. Using the information in the device shutdown message, the network node may promptly allocate or reallocate network resources.

The network node may generate a usage report at the network node, wherein the usage report may specify one or more of a total network data usage of the Internet of Things device and a total number of tasks or applications performed by the Internet of Things device. Using the usage report, the network node may be provided with information on the activities of the IoT device that may not otherwise have been available to the network node.

The generation of the usage report may comprise multiplying the total number of tasks or applications performed by a device by a multiplication factor, wherein the multiplication factor may be an average data usage per instance of network access or may be a charge per task. In this way, the usage report may be used to provide network usage and/or charging information. Further, the usage report may categorise instances of network access according to an application which initiated the network access, to allow closer monitoring and/or more accurate charging.

The network node may receive plural device shutdown messages from plural Internet of Things devices respectively, and the usage report may contain consolidated information from the plural device shutdown messages. In this way, the amount of outgoing network traffic from the node may be reduced.

Further aspects of embodiments of the disclosure provide Internet of Things devices and networks comprising IoT devices, as defined in the claims. The claims define the scope of protection.

BRIEF DESCRIPTION OF DRAWINGS

For a better understanding of the present disclosure, and to show how it may be put into effect, reference will now be made, by way of example only, to the accompanying drawings, in which:

Figure 1 is a flowchart showing an example method performed by an IoT device;
Figure 2 is a flowchart showing an example method performed by a network node;
Figure 3A is a schematic diagram of an example of an IoT device;
Figure 3B is a schematic diagram of a further example of an IoT device;
Figure 4A is a schematic diagram of an example of a network node;
Figure 4B is a schematic diagram of a further example of a network node;
Figure 5 is a schematic diagram of a wireless communication system according to an aspect of an embodiment;
Figure 6 is a signalling diagram for an initial configuration of an IoT device by a network node according to an aspect of an embodiment;
Figure 7 is a signalling diagram for processes performed by an IoT device, network node and partner server, subsequent to the initial configuration of the IoT device, in an aspect of an embodiment.

DETAILED DESCRIPTION

The following sets forth specific details, such as particular embodiments for purposes of explanation and not limitation. It will be appreciated by one skilled in the art that other embodiments may be employed apart from these specific details. In some instances, detailed descriptions of well-known methods, nodes, interfaces, circuits, and devices are omitted so as to not obscure the description with unnecessary detail. Those skilled in the art will appreciate that the functions described may be implemented in one or more nodes using hardware circuitry (e.g., analog and/or discrete logic gates interconnected to perform a specialized function, ASICs, PLAs, etc.) and/or using software programs and data in conjunction with one or more digital microprocessors or general purpose computers that are specially adapted to carry out the processing disclosed herein, based on the execution of such programs. Nodes that communicate using the air interface also have suitable radio communications circuitry. Moreover, the technology can additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions.

In terms of computer implementation, a computer is generally understood to comprise one or more processors, one or more processing modules or one or more controllers, and the terms computer, processor, processing module and controller may be employed interchangeably. When provided by a computer, processor, or controller, the functions may be provided by a single dedicated computer or processor or controller, by a single shared computer or processor or controller, or by a plurality of individual computers or processors or controllers, some of which may be shared or distributed. Moreover, the term "processor" or "controller" also refers to other hardware capable of performing such functions and/or executing software, such as the example hardware recited above.

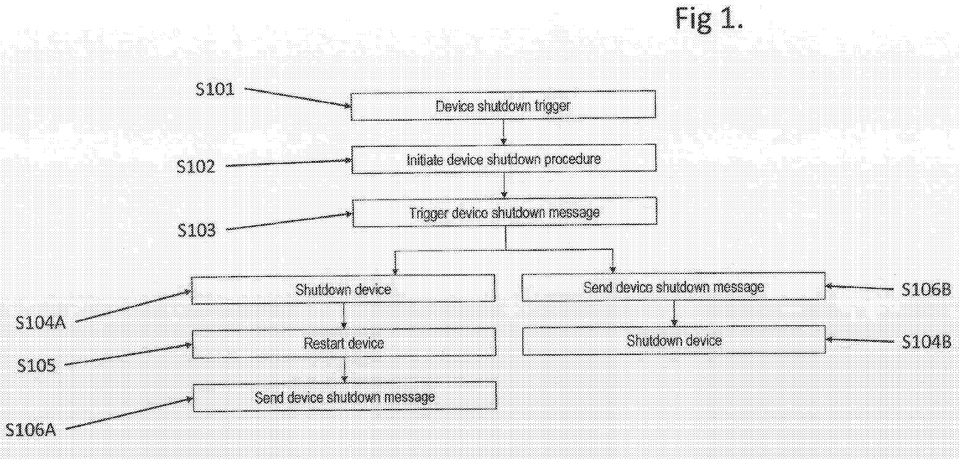

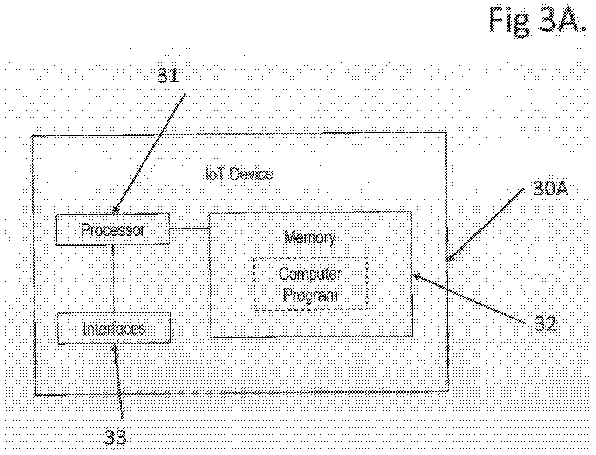

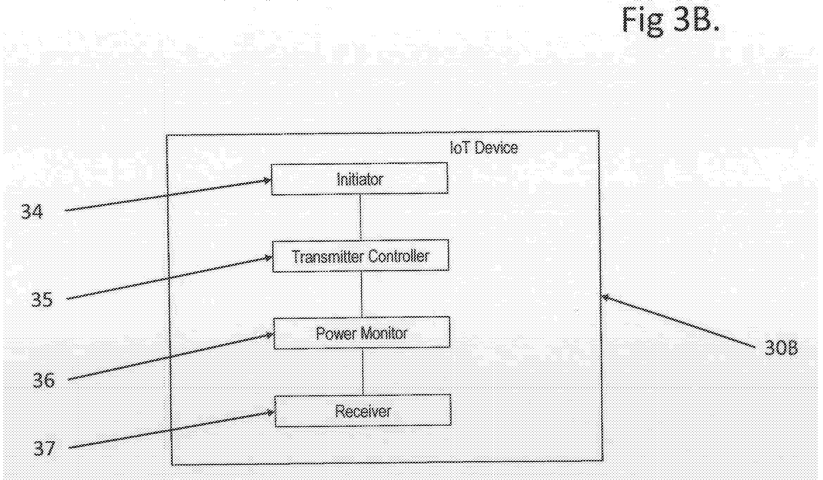

In an aspect of an embodiment, an IoT device may be configured to initiate a device shutdown procedure. The device shutdown procedure may be initiated based on a device shutdown trigger, as shown in **Figure 1** (specifically in step S101). The IoT device may be, for example, the IoT device of either of **Figure 3A** and **Figure 3B.** The device shutdown procedure may be initiated by the processor 31 of the IoT device 30A shown in Figure 3A, executing instructions stored in the memory 32, or may be initiated by the initiator 34 of the IoT device 30B shown in Figure 3B.

The device shutdown trigger may take various forms; for a battery powered device the shutdown procedure may be initiated when the remaining device battery power falls below a predetermined threshold. This threshold may be set such that the device has sufficient power to complete a shutdown procedure (as discussed below) before running out of power, to avoid a situation in which the device runs out of battery power before completing the shutdown procedure. Where a remaining battery power threshold is used, this threshold may also or additionally be set based on other considerations, for example, the threshold may be set so as to ensure enough power would remain after the shutdown for the device to complete a restart procedure. The threshold may also be set based on additional or other considerations.

An IoT device which uses a mains power supply (or another external power supply, such as a generator) may be configured to initiate shutdown when the power supply undergoes a scheduled or unscheduled period of inactivity, that is, where the power source ceases to generate power for the IoT device for a period of time. This may be a scheduled period of inactivity; in some countries there are "rolling blackouts" which are scheduled periods during which the mains power supply to an area of the country is deactivated. The period of inactivity may also be unscheduled; an IoT device may initiate a shutdown procedure if it detects or is informed of a failure in an external power supply, and may further conduct the shutdown procedure utilising power reserves from a limited internal battery reserve. A power threshold may be monitored by the processor 31 of the IoT device 30A shown in Figure 3A, executing instructions stored in the memory 32, or may be monitored by the power monitor 36 of the IoT device 30B shown in Figure 3B.

The device shutdown trigger may also be an instruction received from an external source, where the instruction may be sent over the network and/or may be input directly into the IoT device using, for example, a key. The exact means by which the instruction is received by the IoT device would be dependent on the specific configuration of the device. The device shutdown trigger may be received by the processor 31 of the IoT device 30A shown in Figure 3A via the interfaces 33, executing instructions stored in the memory 32, or may be received by the receiver 37 of the IoT device 30B shown in Figure 3B.

In the aspect of an embodiment illustrated by Figure 1, the device shutdown procedure may be initiated following the device shutdown trigger, as shown in step S102. The device shutdown procedure may encompass various processes depending upon the exact nature of the device; where the IoT device is a sensor the sensor may store one or more readings to an internal memory, where the IoT device is a domestic washing machine the IoT device may initiate a process to drain water from the drum. The process included in the device shutdown procedure are dependent upon the nature and function of the IoT device.

In an aspect of an embodiment, the device shutdown procedure comprises triggering the sending of a device shutdown message to a network node, as shown in step S103 of Figure 1. The device shutdown message may be sent by the IoT device itself using suitable transmitting resources. Alternatively, the IoT device may trigger the sending of the device shutdown message, but the message may be sent by another entity, such as another device. The device shutdown message may be triggered by the processor 31 of the IoT device 30A shown in Figure 3A using the interfaces 33 and executing instructions stored in the memory 32, or may be triggered by the transmitter controller 35 of the IoT device 30B shown in Figure 3B.

The exact composition of the device shutdown message may vary depending upon the specific configuration of the system. The device shutdown message includes an identifier of the IoT device that triggered the message. Where the IoT device may be configured to execute a number of different tasks or applications, the device shutdown message additionally includes information on the tasks or applications, such as one or more application (or task) identifiers. The nature of the tasks or applications executed by an IoT device is determined by the specific nature of the IoT device, and may include the sending and receiving of data, physical movement of components within or by the IoT device, monitoring of parameters by the IoT device, and so on. Where an IoT device executes a complex application, the processes may be divided into a plurality of tasks, that is, an application may comprise plural tasks. In an example of this; where the IoT device is, for example a domestic appliance such as a clothes washing machine a complete cycle (application) may consist of a wash cycle (task) and subsequent drying cycle (task). Alternatively, more simple applications may consist of a single task, so the terms "task" and "application" may be interchangeable. Depending on the composition of a particular system, the device shutdown message may include application or task identifiers (or both). It counts applications executed or tasks executed.

In an aspect of an embodiment wherein the device shutdown message comprises at least a device identifier and optionally an application/task identifier, the device shutdown message comprises an application or task count. The exact nature of the count is determined by the specific IoT device. Where the IoT device is a sensor, the tasks counted may be readings taken, or readings transmitted from the IoT device using the network connection (which may or may not be the same value). Where the readings transmitted is sent as the task count, this may help in calculations of the amount of network resources used, particularly when combined with knowledge of the average amount of data sent in each reading transmission. For other IoT devices, the task count may be less closely related to the amount of network resources uses. Where the IoT device is, for example a domestic appliance such as a clothes washing machine, the task count may be the number of washing cycles completed. The task count may therefore be used to record a number of tasks executed by an IoT device even in cases wherein the tasks do not require network resources; this may be useful where the task count is used for charging purposes as discussed below. A single IoT device may be capable of executing a variety of applications, each of which may or may not comprise plural tasks. Accordingly, a single device shutdown message may comprise plural application and/or task identifiers, with associated counts.

In any of the aspects of embodiments, the application/task count may be the total number of applications/tasks (transmissions, washing cycles, etc.) completed since the first activation of the IoT device, or the first connection of the IoT device to the network. However, where total number information is used, this requires the IoT device to maintain a persistent record of the total task count, which may place additional requirements upon the device, for example, including sufficient storage that can retain information when the device is shutdown. Therefore, the task count may identify the count of tasks since the activation of the device, that is, not taking into account any tasks that occurred before the device was shutdown.

In an aspect of an embodiment, the method may further comprise shutting down the IoT device (see Figure 1, step S104). The IoT device may be shut down following the sending of the device shutdown message, as shown in Figure 1, step S 106B and S 104B. The IoT device may also be shutdown prior to the sending of the device shutdown message (see step S104A); this may be the case, for example, where a mains powered IoT device is subjected to an unscheduled loss of power as discussed above. In situations wherein the IoT device is shut down before the device shutdown message is sent, the device may be configured to retain the device shutdown message so that the message may be sent (see step S106A) following the restart of the device (see step S 105). Sending the device shutdown message even in the event that the device has already shutdown and restarted may be helpful for charging purposes, for example, to retain an accurate record of tasks or applications executed by an IoT device. However, sending the device shutdown message after the shutdown and restart of the IoT device can lead to delays in the information contained in the shutdown message reaching the network node for onward transmission. Also, sending the device shutdown message after the shutdown and restart of the IoT device requires the information to be contained in the device shutdown message to be stored while the IoT device is in a shutdown state (either in the IoT device itself or in a further device responsible for sending the message, depending on the specific configuration of the system), which necessitates the provision of persistent storage. It is therefore preferable for the device shutdown message to be sent prior to the shutdown of the device, particularly for situations wherein the IoT devices are comparatively simple and/or may not be restarted.

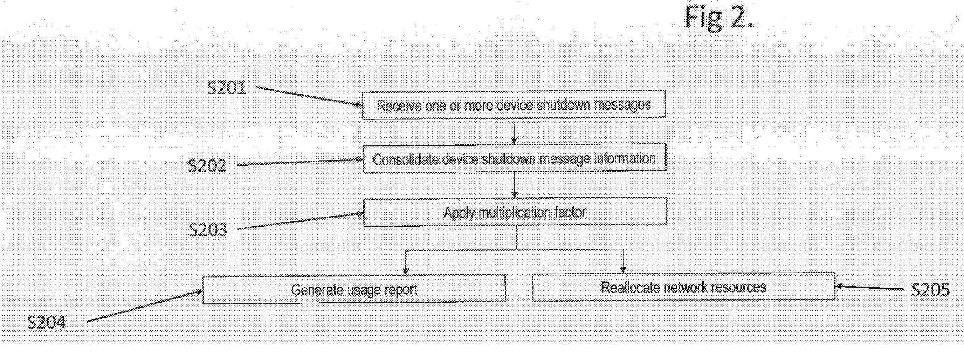

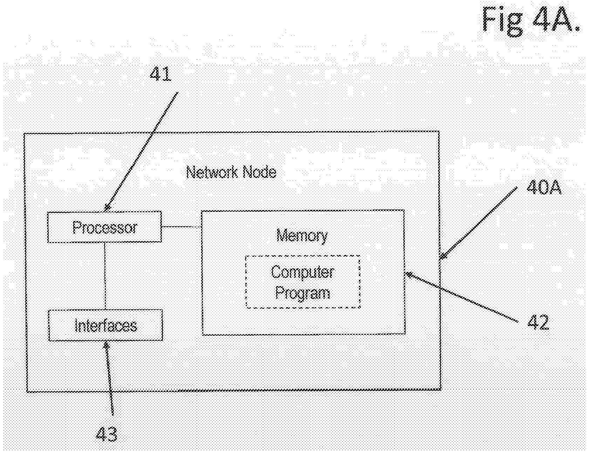

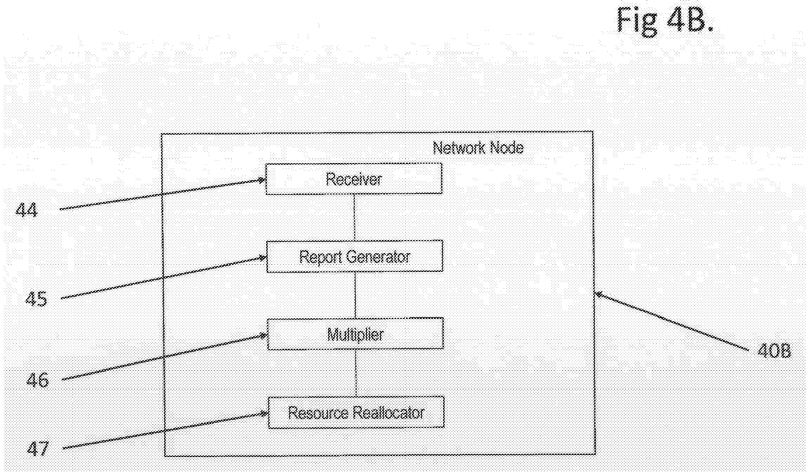

In an aspect of an embodiment, the device shutdown message may be received by a network node, as shown in **Figure 2,** step S201. The network node may be, for example, the network node of either of **Figure 4A** and **Figure 4B.** The device shutdown message may be received by the processor 41 of the network node 40A shown in Figure 4A via the interfaces 43, executing instructions stored in the memory 42, or may be received by the receiver 44 of the network node 40B shown in Figure 4B. The network node may be a conventional base station, as discussed above, or may be any other suitable transmission and reception unit such as a private node, picocell hub, and so on. For conciseness, the term "network node" is used herein to refer to all of the various alternatives where it is not necessary to indicate the specific type of network node used.

Although the network node may be connected to, and receive a device shutdown message from, a single IoT device, typically network nodes are connected to a plurality of IoT devices. The IoT devices may be linked and used for a common purpose, for example, a plurality of temperature sensors used to monitor the temperature at a variety of positions in a given area. Alternatively, the plurality of IoT devices may not be connected or linked to one another, and may all be connected to the network node for other reasons (such as the proximity of the network node to the IoT devices).

Where the network node is connected to a plurality of IoT devices, the network node may receive device shutdown messages from the plurality of IoT devices. The messages may be sent on an individual basis, for example, by each of the IoT devices themselves. Alternatively, and particularly where the device shutdown messages are triggered by the IoT devices but not transmitted by the IoT devices themselves, the device shutdown messages may be sent in batches by a unit responsible for transmissions. An example of a situation wherein device shutdown messages may be sent in batches is where the plurality of IoT devices are contained within a single area overseen by a single owner, for example, where a router in a domestic home is used to send device shutdown messages for a plurality of IoT devices contained in the home and connected to the router.

As shown in Figure 2, step S202, the network node may then consolidate the information from the device shutdown message or messages. Where consolidation takes place, this may comprise one or more of accumulating information from the one or more device shutdown messages, deleting superfluous information, categorising the information from the device shutdown message or messages into two or more categories, and so on. The step of consolidation may be of particular use where plural device shutdown messages are received; the consolidation can then be used to accumulate data relating to the plural devices into a single unified report, which can then be transmitted on using the network in a single report (an example of which is discussed below), thereby reducing the amount of network traffic and saving network capacity. This is of particular use where the network node is connected to a large number of IoT devices; consolidating the information from, for example, a thousand IoT devices into a single report can result in a substantial reduction in onward traffic from the network node. The device shutdown messages may be consolidated by the processor 41 of the network node 40A shown in Figure 4A, executing instructions stored in the memory 42, or by the report generator 45 of the network node 40B shown in Figure 4B.

In addition or alternatively to consolidating information from one or more device shutdown messages, as discussed above, the network node may also apply a multiplication factor to the information. The multiplication factor may be applied by the processor 41 of the network node 40A shown in Figure 4A, executing instructions stored in the memory 42, or by the multiplier 46 of the network node 40B shown in Figure 4B. The application of the multiplication factor is illustrated in step S203 of Figure 2. A number of different multiplication factors may be applied, including the application of different multiplication factors to different information from the same device shutdown message or messages. As an example of this, if information from a plurality of different device shutdown messages is consolidated and categorised into different categories based on the type of originating device (e.g. temperature sensor, pressure sensor), different multiplication factors could then be applied to each of the categories. Where an IoT device executes a plurality of different tasks or applications, different multiplication factors can be applied to counts for the tasks (applications) separately. Also, where plural IoT devices can execute the same task or application, the counts for these tasks or applications from across the device shutdown messages may be summed before applying multiplication factors.

The multiplication factors can be used to calculate various different parameters, some examples of which are discussed below. Where the multiplication factor provides an average data usage per instance of a particular task (or application) which is represented by a category, the product of the task count and the multiplication factor may provide an estimate of the total network data usage associated with the completion of the particular task by the IoT device or devices (in the active period terminated by the shutdown of the IoT device or devices). Where the task count is used to provide information used to charge a user, the multiplication factor may be a cost per task instance, allowing a combination with a task count for the given task to obtain a total cost incurred.

The network node may the generate a usage report using the information from the one or more received device shutdown messages, as shown in step S204 of Figure 2. The report may be generated by the processor 41 of the network node 40A shown in Figure 4A, executing instructions stored in the memory 42, or by the report generator 45 of the network node 40B shown in Figure 4B. The report may be generated using the data from the one or more device shutdown messages with no substantial modification (such that the report is essentially a compilation of the different device shutdown messages). The report may be generated using consolidated information to which a multiplication factor has been applied if the specific aspect of an embodiment includes consolidation and multiplication. The generated usage report may then be transmitted on through the network (for example, to a central server) and/or used to reallocate network resources. As an example of the reallocation of network resources, where the usage report indicates that an IoT device has transmitted a given amount of data, at a given frequency, for a given period of time, this information may be used by the network node (or another component in the network) to identify an amount of network capacity which has been made available by the shutting down of the IoT device. The network node may then take steps to reallocate the network resources (as shown in step S205); this reallocation may take the form of making the network resources available to another IoT device or devices (or further, non-IoT device or devices), or deactivating network components to reduce the total network resources available to save energy. The reallocation of network resources may be executed by the processor 41 of the network node 40A shown in Figure 4A, executing instructions stored in the memory 42, or by the resource reallocator 47 of the network node 40B shown in Figure 4B.

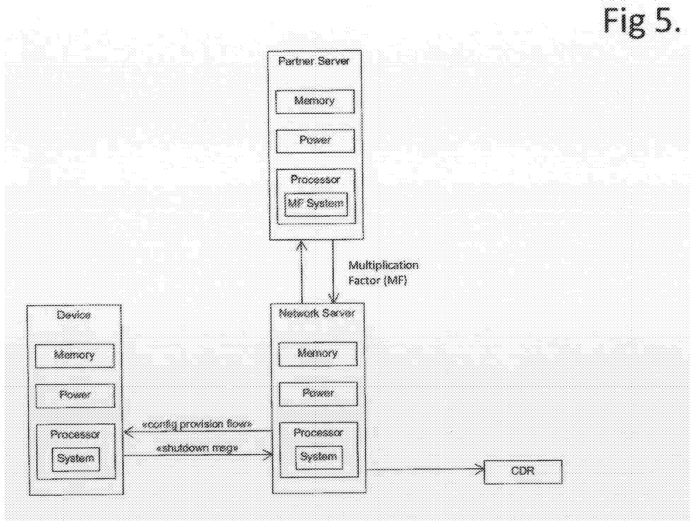

An example of the processes which may be performed by an IoT device, network node and partner server in a network according to an aspect of an embodiment are discussed below, with reference to **Figures 5, 6 and 7.** Figure 5 is a schematic of components in a network in accordance with an aspect of an embodiment. In the example shown in Figure 5, the multiplication factor MF is provided to the network node from a further server, here referred to as the partner server. The present example relates to a system in which the usage report is used to charge a user for tasks executed by plural IoT devices. The partner server is responsible for providing multiplication factors to the network node that indicate a charge per task for tasks performed by the IoT devices. The multiplication factors may be set by a commercial company partnering the network operator, which is why the server is referred to as a partner server.

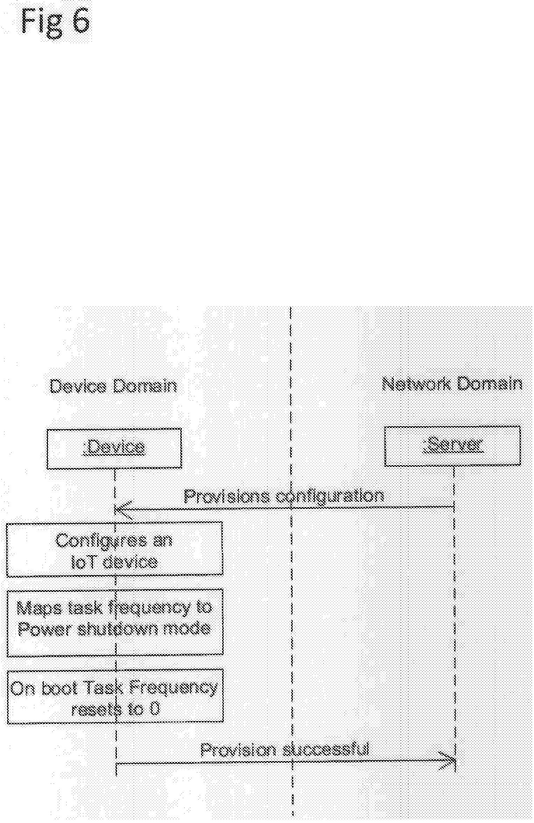

Figure 6 is a signalling diagram for an initial configuration of an IoT device by a network node, typically although not exclusively performed when the IoT device is first connected to the network node, in the aspect of an embodiment shown in Figure 5.

In the aspect of an embodiment shown in Figure 6, the network node provisions (transmits) configuration information to the IoT device. The configuration information is used to configure the IoT device, including causing the IoT device to record the frequency with which a task is executed (the task count) until the IoT devices enters a power shutdown mode. The configuration information also causes the IoT device to set the value of a counter for the task count to zero on IoT device boot; the counter zeroing may therefore occur on initial activation of the device and/or activation following a shutdown. The IoT device then sends a message to the network node indicating that the initial configuration has been successfully completed. Using pseudocode:

Configure : [Shutdown mode, Task Frequency]
On boot : resets [Task Frequency] → 0

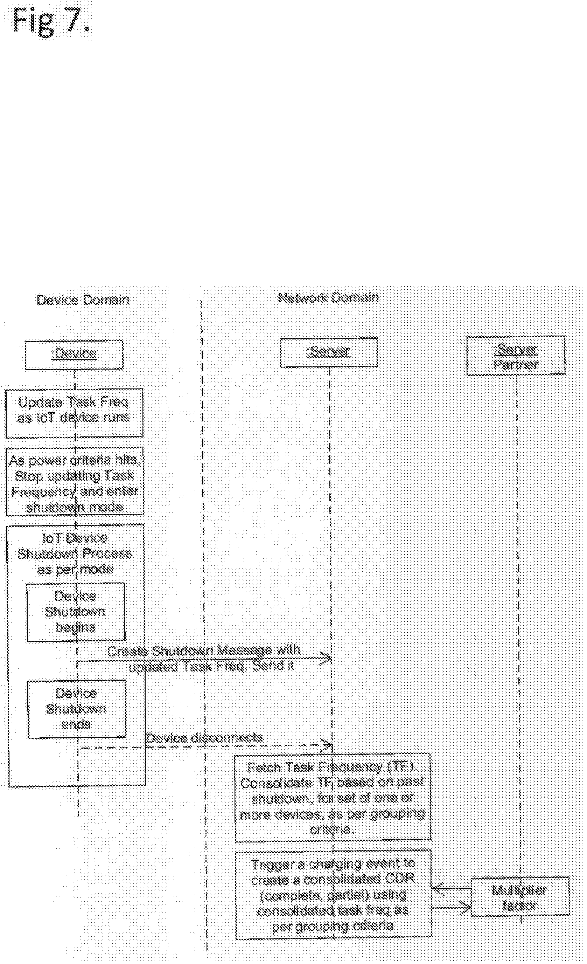

Figure 7 is a signalling diagram for the processes performed by an IoT device, network node and partner server in an aspect of an embodiment, subsequent to the initial configuration of the IoT device (as shown in Figure 6). For each instance of the task being executed by the IoT device, the task count in the IoT device is incremented. In pseudocode:
On run : [Task Frequency] ++

Following a period of operation, the IoT device enters a power shutdown mode. A device shutdown may be triggered, for example, because the device battery is exhausted or falls to a predetermined threshold level, the device is subject to a scheduled or unscheduled interruption in mains power supply, a device shutdown message is received, and so on. The IoT device then stops performing a task and also stops updating the task frequency parameter stored on the IoT device. In the aspect of an embodiment illustrated in Figure 7, the IoT device then fetches the updated task frequency and creates a new shutdown message, initiates transmission of the message towards the network node and disconnects from the network node. In the aspect of an embodiment shown in Figure 7, the device shutdown message includes:

i. device's frequency of completed tasks (task count) since device activation,
ii. device ID (in the aspect of an embodiment shown in Figure 7, the device ID is "P"),
iii. device task ID.

In the aspect of an embodiment the operations performed by the IoT device are monitored on a per task basis, and the device shutdown message does not contain application IDs. Following disconnection, the IoT device completes the shutdown process.

In the aspect of an embodiment shown in Figure 7, the device shutdown message is used to indicate the number of times the IoT device has performed a specific task, for the purpose of generating a report allowing charging of the operator of the IoT device based on the total number of tasks executed. The IoT device of Figure 7 performs three tasks: A, B and C. An IoT may be capable of performing larger or smaller numbers of tasks, including performing a single task. Examples of tasks may include a washing machine performing a wash cycle, or a temperature sensor taking a temperature reading. The task to which a task count relates is identified by the device application ID in the shutdown message. In aspects of embodiments wherein an IoT device is capable of performing a variety of different tasks, the IoT device may retain separate task counts for each of the different tasks, which may be associated with different task IDs. The device shutdown message sent to the network node may then include the separate task counts (in conjunction with the task IDs). The devices may also record applications executed, which may consist of plural tasks as discussed above, and the device shutdown messages may include application IDs and application counts.

The device shutdown message is received at the network node. In the aspect of an embodiment shown in Figure 7, reception in a network node of the message may trigger consolidated report creation logic (which then generates a consolidated usage report) if there is a non-zero task frequency/count received in a device shutdown message. In aspects of embodiments where the network node receives device shutdown messages from a plurality of IoT devices, such as the aspect of an embodiment shown in Figure 7, the generation of a consolidated usage report may be triggered if a non-zero task (or application) frequency is received in a shutdown message from any of the IoT devices. In some aspects of embodiments, the generation of a consolidated usage report may not be triggered upon receipt of every device shutdown message, and may be triggered by only some of the device shutdown messages or by other triggers. As an example of a different trigger; in a system wherein one or more IoT devices are configured to shut down and activate frequently (for example, sensors that shut down between readings), the network node may be configured to generate a consolidated usage report including task count information from the one or more sensors on a periodic basis, such as hourly, daily, or at another periodicity. Additionally or alternatively, the consolidated usage reports may be generated when a predetermined number of device shutdown messages have been received, for example, 10 device shutdown messages.

As indicated in Figure 7, the network node may group the task counts based on various grouping criteria. Potential criteria include grouping according to type of device (for example, task counts for plural devices of the same type may be grouped), application or task (task counts for the same task performed on different devices may be grouped, and/or for tasks that form part of the same application), location of IoT device or network node, time, service-ID (a particular service the user of the IoT device uses), service provider-ID (the party responsible for providing a particular service), uplink traffic, downlink traffic, and so on. The grouping criteria may be locally set at the network server, or may be set elsewhere in the network and communicated to the network server. The aspect of an embodiment shown in Figure 7 uses the task type as a grouping criteria.

In the aspect of an embodiment shown in Figure 7, the illustrated IoT device has the device ID "P", as discussed above. The network node in Figure 7 is also connected to the further IoT devices "Q" and "R", which are not shown in Figure 7. Using pseudocode, the calculation of the consolidated task frequency for task A (TFA) is calculated as:

$$TFA = [TP_A + TQ_A + TR_A \ldots]$$

$TP_A$, $TQ_A$ and $TR_A$ are incoming task frequencies of respective IoT devices (P,Q,R) as per grouping criteria (e.g. for task type 'A') received in device shutdown messages from the IoT devices at the network node. Equivalent calculations may also be performed for other tasks performed by IoT devices connected to the node, such as tasks "B" and "C".

The network node of Figure 7 may then apply one or more multiplication factors to the calculated consolidated task frequencies. As mentioned above, the aspect of an embodiment shown in Figure 7 uses the consolidated task frequencies to generate a Charging Data Record (CDR); a record of the total costs accrued by a user due to one or more IoT devices performing tasks. As such, the multiplication factors used in the system shown in Figure 7 are the costs applied by the network for each instance of the task being performed. The CDR may therefore be created as shown below (using pseudocode):

$$CDR = [k1 * [TFA]] + [k2 * [TFB]] + [k3 * [TFC] + \ldots\ldots]$$

TFA = Consolidated task frequencies for application type 'A' for set of devices
TFB = Consolidated task frequencies for application type 'B' for set of devices
TFC = Consolidated task frequencies for application type 'C' for set of devices
k1 = Multiplication factor for application type 'A' for set of devices.
k2 = Multiplication factor for application type 'B' for set of devices
k3 = Multiplication factor for application type 'C' for set of devices

In the aspect of an embodiment shown in Figure 7 the multiplication factor is based on operator and partner agreed policies to charge for the usage of functionality which the IoT device offers. The network server and partner server may exchange multiplication factors as necessary to account for changes in charging rates. The multiplication factors may be set based on the cost per task agreed between a user and network operator, which may take into account (for example) the amount of data transmission required for the task.

Using the aspect of an embodiment shown in Figures 5, 6 and 7, an accurate CDR for tasks performed by IoT devices connected to a network node may be obtained. Ultimately, the obtained CDR may be combined with CDRs for other network nodes to generate an overall charging record.

It will be understood that the detailed examples outlined above are merely examples. According to embodiments herein, the steps may be presented in a different order to that described herein. Furthermore, additional steps may be incorporated in the method that are not explicitly recited above. For the avoidance of doubt, the scope of protection is defined by the claims.

**Claims**

1. A method in an Internet of Things, IoT, device (30) for assisting network resource allocation, the method comprising:

   - initiating a shutdown procedure of the IoT device (30); and
   - triggering the sending of a device shutdown message to a network node (40),

   **characterized in that** the shutdown message comprises an identifier of the IoT device (30) and a count of the tasks executed by the IoT device (30).

2. The method of claim 1, wherein the shutdown message comprises a task identifier.

3. The method of any preceding claim, further comprising initiating the IoT device (30) shutdown procedure when: a remaining device battery power falls below a threshold level, a mains power supply to the device undergoes a scheduled or unscheduled period of inactivity, or a shutdown is instructed.

4. The method of any preceding claim, further comprising shutting down the Internet of Things device (30).

5. The method of claim 4, further comprising restarting the IoT device (30) following the Internet of Things device shutdown wherein, if the device shutdown message is not sent prior to the shutdown, the device shutdown message is sent following the shutdown.

6. A method in a network comprising the Internet of Things device (30) and the network node (40), the method comprising the steps of any of claims 1 to 5, and further comprising receiving, at the network node (40), the device shutdown message from the Internet of Things device (30).

7. The method of claim 6, further comprising generating a usage report at the network node (40).

8. The method of claim 7, wherein the usage report specifies a total network data usage of the Internet of Things device (30).

9. The method of any of claims 7 and 8, wherein the network usage report specifies a total number of tasks performed by the Internet of Things device (30).

10. The method of claim 9, further comprising multiplying the total number of tasks performed by the IoT device (30) by a multiplication factor.

11. The method of claim 10, wherein the multiplication factor is an average data usage per instance of network access, to obtain an estimated total network data usage.

12. The method of any of claims 7 to 11, wherein the usage report categorises instances of network access according to a task which initiated the network access.

13. The method of any of claims 7 to 12, wherein the network node (40) receives plural device shutdown messages from plural Internet of Things devices (30) respectively, and wherein the usage report contains consolidated information from the plural device shutdown messages.

14. The method of any of claims 6 to 13 further comprising, at the network node (40), reallocating network resources.

15. The method of claim 14, wherein the reallocation of network resources comprises allocating network capacity to further devices.


**Patentansprüche**

1. Verfahren in einer Internet-der-Dinge-, IoT, Vorrichtung (30) zum Unterstützen einer Zuweisung von Netzwerkressourcen,
   wobei das Verfahren umfasst:

- Einleiten eines Abschaltvorgangs der IoT-Vorrichtung (30); und
- Auslösen des Sendens einer Vorrichtungsabschaltnachricht an einen Netzwerkknoten (40), **dadurch gekennzeichnet, dass** die Abschaltnachricht eine Kennung der IoT-Vorrichtung (30) und eine Zählung der von der IoT-Vorrichtung (30) ausgeführten Aufgaben umfasst.

2. Verfahren nach Anspruch 1, wobei die Abschaltnachricht eine Aufgabenkennung umfasst.

3. Verfahren nach einem vorstehenden Anspruch, das weiter Einleiten des Abschaltvorgangs der IoT-Vorrichtung (30) umfasst, wenn: eine verbleibende Batterieleistung der Vorrichtung unter einen Schwellenwert fällt, eine Netzstromversorgung der Vorrichtung eine geplante oder ungeplante Zeitspanne der Inaktivität durchläuft, oder ein Abschalten angewiesen wird.

4. Verfahren nach einem vorstehenden Anspruch, das weiter Abschalten der Internet-der-Dinge-Vorrichtung (30) umfasst.

5. Verfahren nach Anspruch 4, das weiter Neustarten der IoT-Vorrichtung (30) nach dem Abschalten der Internet-der-Dinge-Vorrichtung umfasst, wobei, wenn die Vorrichtungsabschaltnachricht nicht vor dem Abschalten gesendet wird, die Vorrichtungsabschaltnachricht nach dem Abschalten gesendet wird.

6. Verfahren in einem Netzwerk, das die Internet-der-Dinge-Vorrichtung (30) und den Netzwerkknoten (40) umfasst, wobei das Verfahren die Schritte nach einem der Ansprüche 1 bis 5 umfasst, und das weiter Empfangen am Netzwerkknoten (40) der Vorrichtungsabschaltnachricht von der Internet-der-Dinge-Vorrichtung (30) umfasst.

7. Verfahren nach Anspruch 6, das weiter Erzeugen eines Nutzungsberichts am Netzwerkknoten (40) umfasst.

8. Verfahren nach Anspruch 7, wobei der Nutzungsbericht eine gesamte Netzwerkdatennutzung der Internet-der-Dinge-Vorrichtung (30) festlegt.

9. Verfahren nach einem der Ansprüche 7 und 8, wobei der Netzwerknutzungsbericht eine Gesamtzahl der von der Internet der Dinge-Vorrichtung (30) ausgeführten Aufgaben angibt.

10. Verfahren nach Anspruch 9, das weiter Multiplizieren der Gesamtzahl der von der IoT-Vorrichtung (30) ausgeführten Aufgaben mit einem Multiplikationsfaktor umfasst.

11. Verfahren nach Anspruch 10, wobei der Multiplikationsfaktor eine durchschnittliche Datennutzung je Instanz eines Netzwerkzugriffs ist, um eine geschätzte gesamte Netzwerkdatennutzung zu erhalten.

12. Verfahren nach einem der Ansprüche 7 bis 11, wobei der Nutzungsbericht Instanzen eines Netzwerkzugriffs gemäß einer Aufgabe kategorisiert, die den Netzwerkzugriff eingeleitet hat.

13. Verfahren nach einem der Ansprüche 7 bis 12, wobei der Netzwerkknoten (40) mehrere Vorrichtungsabschaltnachrichten von mehreren Internet-der-Dinge-Vorrichtungen (30) empfängt, und wobei der Nutzungsbericht konsolidierte Informationen aus den mehreren Vorrichtungsabschaltnachrichten enthält.

14. Verfahren nach einem der Ansprüche 6 bis 13, das weiter, am Netzwerkknoten (40), Neuzuweisen von Netzwerkressourcen umfasst.

15. Verfahren nach Anspruch 14, wobei die Neuzuweisung von Netzwerkressourcen Zuweisen einer Netzwerkkapazität zu weiteren Vorrichtungen umfasst.

## Revendications

1. Procédé dans un dispositif de l'Internet des objets, IdO, (30) pour aider à l'allocation de ressources de réseau, le procédé comprenant :

- le lancement d'une procédure d'arrêt du dispositif IdO (30) ; et
- le déclenchement de l'envoi d'un message d'arrêt de dispositif à un noeud de réseau (40), **caractérisé en ce**

**que** le message d'arrêt comprend un identifiant du dispositif IdO (30) et un décompte des tâches exécutées par le dispositif IdO (30).

2. Procédé selon la revendication 1, dans lequel le message d'arrêt comprend un identifiant de tâche.

3. Procédé selon une quelconque revendication précédente, comprenant en outre le lancement de la procédure d'arrêt du dispositif IdO (30) lorsque : une puissance restante de la batterie du dispositif tombe en dessous d'un niveau seuil, une alimentation secteur du dispositif subit une période d'inactivité programmée ou non programmée, ou un arrêt est ordonné.

4. Procédé selon une quelconque revendication précédente, comprenant en outre l'arrêt du dispositif de l'Internet des objets (30).

5. Procédé selon la revendication 4, comprenant en outre le redémarrage du dispositif IdO (30) après l'arrêt du dispositif de l'Internet des objets, dans lequel, si le message d'arrêt de dispositif n'est pas envoyé avant l'arrêt, le message d'arrêt de dispositif est envoyé après l'arrêt.

6. Procédé dans un réseau comprenant le dispositif de l'Internet des objets (30) et le noeud de réseau (40), le procédé comprenant les étapes selon l'une quelconque des revendications 1 à 5 et comprenant en outre la réception, au niveau du noeud de réseau (40), du message d'arrêt de dispositif en provenance du dispositif de l'Internet des objets (30).

7. Procédé selon la revendication 6, comprenant en outre la génération d'un rapport d'utilisation au niveau du noeud de réseau (40).

8. Procédé selon la revendication 7, dans lequel le rapport d'utilisation spécifie une utilisation totale de données de réseau du dispositif de l'Internet des objets (30).

9. Procédé selon l'une quelconque des revendications 7 et 8, dans lequel le rapport d'utilisation du réseau spécifie un nombre total de tâches effectuées par le dispositif de l'Internet des objets (30).

10. Procédé selon la revendication 9, comprenant en outre la multiplication du nombre total de tâches effectuées par le dispositif IdO (30) par un facteur de multiplication.

11. Procédé selon la revendication 10, dans lequel le facteur de multiplication est une utilisation moyenne des données par instance d'accès au réseau, pour obtenir une utilisation totale estimée des données de réseau.

12. Procédé selon l'une quelconque des revendications 7 à 11, dans lequel le rapport d'utilisation catégorise des instances d'accès au réseau selon une tâche qui a initié l'accès au réseau.

13. Procédé selon l'une quelconque des revendications 7 à 12, dans lequel le noeud de réseau (40) reçoit respectivement plusieurs messages d'arrêt de dispositif en provenance de plusieurs dispositifs de l'Internet des objets (30) et dans lequel le rapport d'utilisation contient des informations consolidées provenant des plusieurs messages d'arrêt de dispositif.

14. Procédé selon l'une quelconque des revendications 6 à 13, comprenant en outre, au niveau du noeud de réseau (40), la réallocation de ressources de réseau.

15. Procédé selon la revendication 14, dans lequel la réallocation de ressources de réseau comprend l'allocation d'une capacité réseau à d'autres dispositifs.

Fig 1.

S101 → Device shutdown trigger

S102 → Initiate device shutdown procedure

S103 → Trigger device shutdown message

S104A → Shutdown device

S106B → Send device shutdown message

S105 → Restart device

S104B → Shutdown device

S106A → Send device shutdown message

EP 3 942 487 B1

Fig 2.

S201 — Receive one or more device shutdown messages

S202 — Consolidate device shutdown message information

S203 — Apply multiplication factor

S204 — Generate usage report

Reallocate network resources — S205

EP 3 942 487 B1

Fig 3A.

Fig 3B.

IoT Device

Initiator

Transmitter Controller

Power Monitor

Receiver

34

35

36

37

30B

EP 3 942 487 B1

EP 3 942 487 B1

Fig 4A.

Network Node

Memory

Computer Program

Processor

Interfaces

40A

42

41

43

16

Fig 4B.

Network Node

Receiver

Report Generator

Multiplier

Resource Reallocator

40B

44

45

46

47

Fig 5.

## Fig 6

# Fig 7.

**EP 3 942 487 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150065129 A1